# EUROPEAN PATENT SPECIFICATION

(11) **EP 3 469 401 B1**
(45) Date of publication and mention of the grant of the patent: **01.05.2024**
(21) Application number: 17745359.4
(22) Date of filing: 03.08.2017
(51) Int. Cl.: G01T 1/29

(54) **IMAGING TECHNOLOGIES**
BILDGEBUNGSTECHNOLOGIEN
TECHNOLOGIES D'IMAGERIE

(30) Priority: 05.08.2016 EP 16183079
(43) Date of publication of application: 17.04.2019
(73) Proprietor: Universitätsklinikum Regensburg, 93053 Regensburg (DE)
(72) Inventor: HELLWIG, Dirk, 93053 Regensburg (DE)
(74) Representative: Lucke, Andreas
(86) International application number: PCT/EP2017/069619
(87) International publication number: WO 2018/024813

(56) References cited:
- WO-A1-2004/027453
- WO-A1-2014/020359
- WO-A1-2016/064133
- WO-A2-03/047694
- WO-A2-2008/059426
- US-A1- 2005 082 486
- DAVID L ALEXOFF ET AL: "PET imaging of thin objects: measuring the effects of positron range and partial-volume averaging in the leaf of", NUCLEAR MEDICINE AND BIOLOGY, ELSEVIER, NY, US, vol. 38, no. 2, 17 August 2010 (2010-08-17), pages 191-200, XP028359720, ISSN: 0969-8051, DOI: 10.1016/J.NUCMEDBIO.2010.08.004 [retrieved on 2010-08-23]
- KOMAROV SERGEY ET AL: "Cherenkov luminescence imaging in transparent media and the imaging of thin or shallow sources", JOURNAL OF BIOMEDICAL OPTICS, SPIE, vol. 20, no. 3, 1 March 2015 (2015-03-01), page 36011, XP060053763, ISSN: 1083-3668, DOI: 10.1117/1.JBO.20.3.036011 [retrieved on 2015-03-19]
- Peter E. H. Minchin ET AL: "Using the short-lived isotope 11C in mechanistic studies of photosynthate transport", Functional Plant Biology, vol. 30, no. 8, 1 January 2003 (2003-01-01), page 831, XP55715435, Collingwood, Australia ISSN: 1445-4408, DOI: 10.1071/FP03008

## Description

The invention relates to imaging technologies.

### BACKGROUND

Several imaging technologies are used in medical and research context for the examination of humans, animals and / or plants or parts of it. Two examples are positron emission tomography (PET) and Cherenkov imaging.

PET is an imaging technique that produces static or dynamic three-dimensional images of radioactivity distributions in a subject. A radioactive substance containing a positron emitting radioisotope is applied to the subject. The radioactive substance is deposited or accumulates in one or more specific regions of the subject, e.g. in tumor cells. Decay of the radioactive substance leads to beta-plus radiation (positrons). A positron emitted by the radioactive substance interacts with the surrounding matter causing loss of kinetic energy of the positron. If the positron binds with an electron as its anti-particle, it will annihilate. As a result of the annihilation of the electron-positron pair, two photons (with an energy of 511 keV each) are created which diverge from the place of annihilation in substantially diametrical directions. The photons can be detected in order to investigate the specific region. The coincidence detection of annihilation photons by a set of at least two detectors arranged around the subject allows to quantitatively estimate the radioactivity concentration within the volume of interest.

PET allows absolute quantification of radioactivity concentrations, if the measurements are corrected for deteriorating effects like detector dead time, detector efficiency, detector calibration, random coincidences, photon scatter and photon attenuation. The correction for scatter and attenuation needs information about the electron density in the field of view (FOV) of the PET system. This information can be obtained from computed tomography (CT) images which are mathematically reconstructed from X-ray transmission measurements. Nowadays, combined PET/CT scanners are the standard equipment for PET examinations. Thus, attenuation and scatter correction of PET measurements is mainly based on data obtained from CT images. Artifacts in the CT images may therefore hamper PET image reconstruction resulting in artifacts in PET images which may be noticed by visual assessment of the images or by quantitative evaluation. CT image artifacts may arise from large gradients in electron density within the examined subject, e.g. around metallic implants or superficial metallic electrodes. No metallic obj ects should be in the FOV of the PET and CT system to avoid artifacts in the PET and CT images. The same is true for objects with high mass density.

Nuclear magnetic resonance (MR) tomography is another imaging modality used in medicine, veterinary, and research. Magnetic fields and radio waves are used to form images of the investigated subject. Attenuation and scatter correction of PET measurements can also be derived from MR images. Artifacts in MR images may therefore hamper PET image reconstruction resulting in artifacts in PET images which may be noticed by visual assessment of the images or by quantitative evaluation. MR image artifacts may arise from large gradients in susceptibility within the FOV of the MR system, e.g. around metallic implants or superficial metallic electrodes. No metallic or magnetic objects should be in the FOV of the PET and MR system to avoid artifacts in PET and MR images.

Cherenkov imaging is based on Cherenkov radiation which is electromagnetic radiation emitted when a charged particle, e.g. beta-minus radiation (electrons) or beta-plus radiation or a Compton electron liberated in the process of scattering of gamma rays, passes through a dielectric medium at a speed greater than the phase velocity of light in that medium. Similar to PET, a radioactive substance is applied to a subject. Light produced by radiation emitted from the radioactive substance is detected in order to draw conclusions about the tissue where the radioactive substance is accumulated or deposited.

Light from Cherenkov radiation exhibits broadband spectral constituents decreasing with wavelength to the inverse square power. Due to the predominantly shorter wavelengths, the Cherenkov radiation appears bluish-white when observed visually.

Document WO 2008/059426 A2 discloses a system for determining a distribution of radioactive agents in a subject. The system comprises two or more detectors which are attached to the subject at localized areas. The detectors are used for detecting radiation emitted from imaging agents localized at tissues within the subject.

Document WO 03/047694 A2 discloses a disposable single use external dosimeter for use in radiation therapies. Radiation sensor patches are arranged at the skin of a patient using adhesive means. The sensor patches evaluate a radiation dose delivered during a treatment session. The sensor patches are configured to be minimally obtrusive and operate without the use of externally extended power cords or lead wires.

Document WO 2014/020359 A1 discloses a fiberscope for optical imaging of radiopharmaceuticals. An apparatus for optical imaging of Cherenkov luminescence from a region of interest on a subject is provided. The apparatus comprises an imaging means capable of imaging Cherenkov photons, a fiber scope for transmitting light received at distal end of the fiber scope to a proximal end of the fiber scope, wherein the proximal end of the fiber scope is connected to the imaging means and an optical shroud for surrounding the distal end of the fiber scope and for covering the region of interest.

Document WO 2016/064133 A1 discloses a method and an apparatus for differentially detecting beta rays and gamma rays.

Document WO 2004/027453 A1 discloses a radiation detector able to detect positron emission by means of a scintillator sensitive to x-rays that can convert positron emission radiation into radiation of a lower energy.

David L Alexoff et al. described in "PET imaging of thin objects: measuring the effects of positron range and partial-volume averaging in the leaf of Nicotiana tabacum", NUCLEAR MEDICINE AND BIOLOGY, ELSEVIER, NY, US, vol. 38, no. 2, 17 August 2010 (2010-08-17), pages 191-200, a method comprising suspending a leaf section treated with a radiotracer between two plexiglass pieces, wherein the leaf section is separated about 10 mm from each plexiglass plate by means of plexiglass spacers.

Komarov Sergey et al. described in "Cherenkov luminescence imaging in transparent media and the imaging of thin or shallow sources", JOURNAL OF BIOMEDICAL OPTICS, SPIE, vol. 20, no. 3, 1 March 2015 (2015-0301), page 36011, a method comprising placing an acrylic transducer over a cucumber plant labelled with ¹¹CO₂ gas, wherein a black plastic sheet is used to separate the acrylic transducer from the plant.

Peter E. H. Minchin et al. in "Using the short-lived isotope 11C in mechanistic studies of photosynthate transport", Functional Plant Biology, vol. 30, no. 8, 1 January 2003, describe a detection technique for ¹¹C isotopes from a plant comprising gloving the plant in positron shields right up against the plant.

US 2005/0082486 A1 discloses a PET scanner configured for being mounted on the head of a conscious animal such that scintillator detectors are adjacent to the head of the animal and can detect gamma radiation originated from positron annihilations within the animal.

### SUMMARY

It is an object to provide improved techniques for imaging technologies.

The invention refers to a method according to claim 1, a use of a radiation receiving device according to claim 10 and an arrangement according to claim 11 are provided. Further embodiments are subject matter of dependent claims.

One aspect of the invention refers to a method according to claim 1. The method comprises steps of arranging a radiation receiving device directly on a surface of a subject above a specific region of the subject, wherein the specific region is located below a surface of the subject or at the surface of the subject, arranging a radiation receiving device on the surface of the subject above the specific region, wherein the radiation receiving device is adapted to generate a signal from radiation emitted by the radioactive substance and entering the radiation receiving device, and detecting the signal by a detection device. According to the invention, the radioactive substance emits positrons and the radiation receiving device is adapted to prevent an escape of the positrons and to generate annihilation radiation within the radiation receiving device which is detected by the detection device.

According to an alternative that does not correspond to the invention as defined in the claims but may be useful for the understanding thereof, radioactive decay of the radioactive substance results in the emission of charged particles and the radiation receiving device is adapted to generate light emission from Cherenkov radiation, and wherein the detection device is an optical detection device which is adapted to detect the light emission. The radioactive substance may be used in a topical application on the subject.

A method that does not correspond to the invention as defined in the claims but may be useful for the understanding thereof may comprise the steps of: applying a radioactive substance to a subject, wherein the radioactive substance accumulates in a specific region of the subject, wherein the specific region is located below a surface of the subject or at the surface of the subject, arranging a radiation receiving device on the surface of the subject above the specific region, wherein the radiation receiving device is adapted to generate a signal from radiation emitted by the radioactive substance and entering the radiation receiving device, and detecting the signal by a detection device.

The specific region of the subject containing the accumulation of the radioactive substance may be separated and / or removed from the subject completely or in parts prior to detecting the signal by the detection device.

A further aspect of the invention refers to a use of a radiation receiving device according to claim 10. The radiation receiving device is adapted to generate a signal from radiation emitted by a radioactive substance and entering the radiation receiving device. For example, the radiation receiving device may be used in cases where the specific region of the subject is a suspected or proven malignant tumor, a non-neoplastic tumor, an inflammatory lesion, an infectious lesion, a traumatic lesion, normal or abnormal skin, wounds (either injury induced, such as cuts, abrasions, bites, or blisters, or surgically induced, such as surgical incisions or ostomies), scar tissue, or a parasitic, symbiotic, or infectious infiltration in the subject.

Still another aspect of the invention refers to an arrangement according to claim 11, comprising: a radioactive substance which is suitable for being applied to a subject, wherein the radioactive substance accumulates in a specific region of the subject, wherein the specific region is located below a surface of the subject or at the surface of the subject, a radiation receiving device which is suitable for being arranged on the surface of the subject above the specific region, wherein the radiation receiving device is adapted to generate a signal from radiation emitted by the radioactive substance and entering the radiation receiving device, and a detection device which is adapted to detect the signal. According to the invention, the radioactive substance emits positrons and the radiation receiving device is adapted to prevent an escape of the positrons and to generate annihilation radiation within the radiation receiving device which is detected by the detection device.

According to an alternative that does not correspond to the invention as defined in the claims but may be useful for the understanding thereof, radioactive decay of the radioactive substance results in the emission of charged particles and the radiation receiving device is adapted to generate light emission from Cherenkov radiation, and wherein the detection device is an optical detection device which is adapted to detect the light emission. The radiation receiving device and / or the detection device may be arranged in an opaque housing. There may be more than one detection device which are adapted to detect the signal.

In the method and / or in the arrangement, the radiation receiving device is arranged directly on the surface of the subject. At least a portion of the radiation receiving device is in direct contact with the surface of the subject.

The specific region being located below the surface of the subject may comprise that the specific region is located in the subject close to the surface of the subject, e.g. less than 2 cm, less than 1 cm, less than 0.5 cm or less than 0.2 cm below the surface.

The radioactive substance may accumulate or deposit or may be deposited in more than one specific region of the subject.

For purposes of the present application, the term "subject" refers to a human, an animal, a plant, or a part of the aforementioned. The surface of the subject may be the skin of the subject or a region of injured skin of the subject.

The radioactive substance may be a radionuclide, a chemical compound comprising a radionuclide (e.g. a radiopharmaceutical) or a physical composition comprising a radionuclide.

A thickness of the radiation receiving device may be adjusted to the radioactive substance, such that the thickness measured in millimeters is 3 to 6 times the maximum kinetic energy of the particles emitted by radioactive decay of the radioactive substance measured in mega electron volts. In general, the radiation receiving device may have a thickness of 1 mm to 2 cm.

A width of the radiation receiving device may be adjusted to the radioactive substance, such that a length of a portion of the radiation receiving device which extends beyond the specific region measured in millimeters is 3 to 6 times the maximum kinetic energy of the particles emitted by radioactive decay of the radioactive substance measured in mega electron volts.

According to the invention, the radioactive substance emits positrons (beta-plus radiation) and the radiation receiving device is adapted to prevent an escape of the positrons and to generate annihilation radiation within the radiation receiving device which is detected by the detection device. The invention may be used in positron emission tomography (PET). The detection device may comprise at least two detectors coupled with each other in a coincidence circuit and configured to detect the annihilation radiation (photons). The detector device may further comprise several detectors for detecting the photons which are arranged in one or several rings or subrings. Detectors for PET are known in the art and are not further described herein.

By PET, not the position of the positron emission from the radioactive substance is determined, but the position of the subsequent annihilation event. If the radioactive substance is completely surrounded by tissue of the subject, the range of a positron from typically used radioisotopes is several millimeters and the region where the radioactive substance is deposited can be detected. However, if the radioactive substance is deposited or accumulates in a specific region close below or at the surface of the subject, part of the positrons emitted by the radioactive substance may escape through the surface of the subject and move into the surrounding air. Air has a mass density which is much lower than the mass density of the tissue. In air, the range of a positron before it annihilates with an electron is much larger, namely several meters for typically used radioisotopes. In conventional PET, the positrons moving through the air are lost for detection.

According to the present invention, the radiation receiving device is arranged on the surface of the subject above the specific region where the radioactive substance is deposited or accumulates. Thus, positrons leaving the specific region through the surface of the subject enter the radiation receiving device. In the radiation receiving device, the positrons interact with electrons generating annihilation radiation close to the specific region which can be detected by the detection device. Thus, the signal intensity of PET may be increased by the radiation receiving device.

If the radioactive substance is completely surrounded by tissue of the subject, the range of a positron from typically used radioisotopes is several millimeters and the region where the radioactive substance is deposited can be detected. However, if the radioactive substance is deposited or accumulates in a specific region close below or at the surface of the subject, a portion of the positrons emitted by the radioactive substance may escape through the surface of the subject and move into the surrounding air. Air has a mass density which is much lower than the mass density of the tissue. Thus, the range of positrons in air is in the order of several meters and particles escaping in the air are lost for the detection process.

The radioactive substance may also be called a tracer. Several radionuclides suitable for PET or Cherenkov imaging are listed in the following table, wherein Eₘₐₓ is the maximum kinetic energy and Rₘₐₓ is the estimated maximum range (in air and in water) of the relevant emitted particle as derived from Eₘₐₓ.

| **Radionuclide** | **Emission** | **Eₘₐₓ [MeV]** | **Rₘₐₓ in air [cm]** | **Rₘₐₓ in water [cm]** |
|---|---|---|---|---|
| C-11 | β+ | 0.961 | 325 | 0.392 |
| N-13 | β+ | 1.198 | 429 | 0.517 |
| O-15 | β+ | 1.735 | 676 | 0.814 |
| F-18 | β+ | 0.634 | 190 | 0.229 |
| Na-22 | β+ | 0.546 | 156 | 0.188 |
| P-32 | β⁻ | 1.709 | 664 | 0.799 |
| Sc-44 | β⁺ | 0.632 | 189 | 0.228 |
| Sc-47 | β⁻ | 0.600 | 177 | 0.213 |
| Cu-64 | β⁺ | 0.653 | 198 | 0.238 |
| Cu-64 | β⁻ | 0.579 | 169 | 0.203 |
| Cu-67 | β⁻ | 0.577 | 168 | 0.202 |
| Ga-68 | β⁺ | 1.885 | 747 | 0.899 |
| As-71 | β⁺ | 0.810 | 261 | 0.315 |
| As-72 | β⁺ | 3.340 | 1454 | 1.751 |
| As-74 | β⁺ | 1.540 | 585 | 0.704 |
| As-74 | β⁻ | 1.353 | 499 | 0.601 |
| As-77 | β⁻ | 0.680 | 208 | 0.251 |
| Br-76 | β⁺ | 3.382 | 1475 | 1.776 |
| Rb-82 | β⁺ | 3.381 | 1475 | 1.776 |
| Y-86 | β⁺ | 2.243 | 918 | 1.105 |
| Sr-89 | β⁻ | 1.495 | 564 | 0.679 |
| Zr-89 | β⁺ | 0.902 | 300 | 0.361 |
| Y-90 | β⁺ | 0.738 | 232 | 0.279 |
| Y-90 | β⁻ | 2.279 | 935 | 1.126 |
| I-124 | β⁺ | 2.138 | 867 | 1.044 |
| I-131 | β⁻ | 0.606 | 179 | 0.216 |
| Pm-149 | β⁻ | 1.070 | 373 | 0.449 |
| Sm-153 | β⁻ | 0.705 | 218 | 0.263 |
| Tb-161 | β⁻ | 0.590 | 173 | 0.208 |
| Dy-165 | β⁻ | 1.286 | 469 | 0.564 |
| Ho-166 | β⁻ | 1.854 | 732 | 0.881 |
| Er-169 | β⁻ | 0.353 | 86 | 0.104 |
| Lu-177 | β⁻ | 0.498 | 138 | 0.166 |
| Re-186 | β⁻ | 1.070 | 373 | 0.449 |
| Re-188 | β⁻ | 2.120 | 859 | 1.034 |
| Au-198 | β⁻ | 0.961 | 325 | 0.392 |
| Au-199 | β⁻ | 0.453 | 121 | 0.146 |
| Pb-212 | β⁻ | 0.574 | 167 | 0.201 |

At least a portion of the radiation receiving device or the complete radiation receiving device may be transparent to one of the following: visible light, near-infrared radiation, infrared radiation, ultraviolet radiation and a combination thereof.

The method further comprises a step of fixing the radiation receiving device to the surface by an adhesive. The adhesive may be provided on the radiation receiving device. For example, the adhesive may be provided on a border area of the radiation receiving device, leaving open an inner region which is arranged above the specific region. Alternatively, a complete surface of the radiation receiving device may be covered with the adhesive. The adhesive may be transparent for visible light, infrared radiation, ultraviolet radiation and combinations thereof. The step of fixing may be performed without damaging the surface of the subject, e.g. the skin of the subject shall not be injured when fixing the radiation receiving device.

The radiation receiving device may comprise a material having a mass density between 0.5g/cm³ and 2.5g/cm³. Parts of the radiation receiving device or the complete radiation receiving device may be made of a material having a mass density between 0.5g/cm³ and 2.5g/cm³. The property of a material to stop positrons in order to generate annihilation radiation can be defined by the mass density which is approximately proportional to the electron density.

The radiation receiving device comprises a material having a mass density larger than the mass density of air. Parts of the radiation receiving device or the complete radiation receiving device may be made of a material having a mass density larger than the mass density of air. The radiation receiving device may comprise a material having a mass density which is similar to the mass density of tissue of the subject. Parts of the radiation receiving device or the complete radiation receiving device may be made of a material having a mass density which is similar to the mass density of tissue of the subject.

The radiation receiving device may comprise a solid material, a flexible material, a gel material or a combination thereof. The radiation receiving device may be made of a solid material, a flexible material, a gel material or a combination thereof.

According to the invention, the radiation receiving device comprises a radiation receiving material that is a plastic material, a rubber material, a silicon rubber material, a foam material or a combination thereof or a gel material.

The radiation receiving device may comprise a dielectric material. The radiation receiving device may be made of a dielectric material.

The radiation receiving device may comprise a non-metallic material and / or a non-magnetic material. The radiation receiving device may be made of a non-metallic material and / or of a non-magnetic material. If PET is combined with magnetic resonance imaging (MRI) or computed tomography (CT) using metallic materials and / or magnetic (ferromagnetic) materials for the radiation receiving device may lead to artifacts in MRI / CT images. In order to avoid such artifacts, a non-metallic material and / or a non-magnetic material may be provided for the radiation receiving device.

According to the invention, the radiation receiving device is formed as a patch having a layer and / or a container of the radiation receiving material. The radiation receiving material may be arranged in an inner region of the patch. An outer region of the patch may comprise an adhesive layer for fixing the patch to the surface. The adhesive layer may be formed in parts of the inner and / or outer region or may cover the complete inner and / or outer region of the patch. The patch may be arranged on the surface such that the radiation receiving material covers the specific region. All features disclosed for the material of the radiation receiving device may also apply to the radiation receiving material and vice versa.

The radiation receiving device may have a flat form or may be formed as a semi-circle.

Following, a list of suitable materials for the radiation receiving device and / or the radiation receiving material is provided:
- polymethylmethacrylate (PMMA, mass density 1.19g/cm³),
- polycarbonate (e.g. Macrolon or Lexan; PC according to DIN ISO 1629),
- silicone rubber (SI according to DIN ISO 1629),
- rubber (mass density between 0.92 - 0.96 g/cm³),
- chloroprene rubber (e.g. Neopren; CR according to DIN ISO 1629),
- styrene butadiene rubber (SBR according to DIN ISO 1629),
- styrene butadiene latex (SBL according to DIN ISO 1629),
- nitrile rubber (NBR according to DIN ISO 1629),
- polybutadiene rubber (BR according to DIN ISO 1629),
- ethylene propylene diene rubber (EPDM according to DIN ISO 1629),
- fluorine rubber (e.g. Viton; FPM and FKM according to DIN ISO 1629),
- natural rubber (NR according to DIN ISO 1629),
- polyurethane (PU according to DIN ISO 1629),
- poly vinyl chloride (PVC),
- paper (mass density approximately 0.8 g/cm³),
- paraffin (mass density 0.86 - 0.93 g/cm³),
- wax (mass density 0.9 - 0.98 g/cm³),
- water (mass density approximately 1g / cm³),
- polystyrene (mass density 1.04 - 1.09 g/cm³),
- laminated paper (e.g. Pertinax; mass density 1.35 g/cm³),
- quartz glass (mass density 2.201 g/cm³),
- glass,
- hydrocolloid, and
- gel, e.g. comprising: poly(oxythylen)-54-hydrated ricinus oil, polyacrylic acid (carbomer 974P), sodium hydroxide, purified water, cellulose, polyethylene, poly(acrylamide-co-isooctylacrylate), bleached film coated with polyethylene and siliconized.

The DIN ISO 1629 refers to the standard DIN ISO 1629:2015-03 published in March 2015.

All materials may be used for forming the radiation receiving device as a single piece or as radiation receiving material of the patch.

In another embodiment, the radiation receiving material may be formed as foam, e.g. from a foamable material which may be selected from the above mentioned materials.

The radiation receiving device may comprise a fluorophore and / or fluorescent particles. A fluorophore is a fluorescent chemical compound that can re-emit light upon light excitation. The fluorophore absorbs light energy of a specific wavelength and re-emits light at a different (e.g. longer) wavelength. The light from Cherenkov radiation which exhibits predominantly shorter wavelengths may be absorbed by the fluorophore and re-emitted with a longer wavelength. Several fluorophores are suitable for Cherenkov imaging. Following, a list of suitable fluorophores for the radiation receiving device is provided:
- phosphor
- fluorescent proteins, and
- non-protein organic fluorophores, e.g.
   - Xanthene derivatives: e.g. fluorescein, rhodamine (e.g. rhodamine 6G, rhodamine B, rhodamine 123, Carboxytetramethylrhodamine (TAMRA), tetramethylrhodamine (TMR) and its isothiocyanate derivative (TRITC) and, sulforhodamine 101 - and its sulfonyl chloride form Texas Red - and Rhodamine Red, Alexa 546, Alexa 555, Alexa 633, DyLight 550 and DyLight 633, HiLyte fluor 555 HiLyte 594), Oregon green, and eosin,
   - Cyanine derivatives: e.g. cyanine, indocarbocyanine, oxacarbocyanine, thiacarbocyanine, and merocyanine, indocyanine green, infracyanine green
   - Squaraine derivatives or ring-substituted squaraines, including Seta, SeTau, and Square dyes,
   - Naphthalene derivatives: e.g. dansyl and prodan derivatives,
   - Coumarin derivatives,
   - Oxadiazole derivatives: e.g. pyridyloxazole, nitrobenzoxadiazole and benzoxadiazole,
   - Anthracene derivatives: e.g. anthraquinones, including DRAQ₅, DRAQ₇ and CyTRAK Orange,
   - Pyrene derivatives: e.g. cascade blue,
   - Oxazine derivatives: e.g. Nile red, Nile blue, cresyl violet, oxazine 170,
   - Acridine derivatives: e.g. proflavin, acridine orange, acridine yellow,
   - Arylmethine derivatives: e.g. auramine, crystal violet, malachite green,
   - Tetrapyrrole derivatives: e.g. porphin, phthalocyanine, bilirubin.

Particular fluorophores considered are: Alexa Fluor dyes, including Alexa Fluor^{®} 350, 405, 430, 488, 514, 532, 546, 555, 568, 594, 610, 633, 647, 660, 680, 700, 750, and 790 (Life Technologies, Carlsbad, Calif.); coumarin dyes, including 3-cyano-7-hydroxycoumarin, 6,8-difluoro-7-hydroxy-4-methylcoumarin, 7-amino-4-methylcoumarin, 7-ethoxy-4-trifluoromethylcoumarin, 7-hydroxy-4-methylcoumarin, 7-hydroxycoumarin-3-carboxylic acid, 7-dimethylamino-coumarin-4-acetic acid, 7-amino-4-methyl-coumarin-3-acetic acid, and 7-diethylamino-coumarin-3-carboxylic acid (Life Technologies, Carlsbad, Calif.); BODIPY^{®} dyes, including BODIPY 493/503, FL, R6G, 530/550, TMR, 558/568, 564/570, 576/589,581/591, TR, 630/650, and 650/655 (Life Technologies, Carlsbad, Calif.); Quantum Dots, including Qdot^{®} 545 ITK^{™}, Qdot 565 ITK, Qdot 585 ITK, Qdot 605 ITK, Qdot 655 ITK, Qdot 705 ITK, and Qdot 800 ITK (Life Technologies, Carlsbad, Calif.); Oregon Green^{®} dyes, including Oregon Green 488, 488, and 514 (Life Technologies, Carlsbad, Calif.); LanthaScreen^{®} Tb Chelates (Life Technologies, Carlsbad, Calif.); Rhodamine 110, Rhodamine Green, Rhodamine Red, Texas Red-X, Cascade Blue, Pacific Blue, Marina Blue, Pacific Orange, Dapoxyl Sulfonyl Chloride, Dapoxyl Carboxylic Acid, 1-Pyrenebutanoic Acid, 1-Pyrenesulfonyl Chloride, 2-(2,3-Naphthalimino) ethyl Trifluoromethanesulfonate, 2-Dimethylaminonaphthalene-5-Sulfonyl Chloride, 2-Dimethylaminonaphthalene-6-Sulfonyl Chloride, 3-Amino-3-Deoxydigoxigenin Hemisuccinamide, 4-Sulfo-2,3,5,6-Tetrafluorophenol, 5-(and-6)-Carboxyfluorescein, 5-(and-6)-Carboxynaphthofluorescein, 5-(and-6)-Carboxyrhodamine 6G, 5-(and-6)-Carboxytetramethylrhodamine, 5-(and-6)-Carboxy-X-Rhodamine, 5-Dimethylaminonaphthalene-1-Sulfonyl Chloride (Dansyl Chloride), 6-((5-Dimethylaminonaphthalene-1-Sulfonyl)amino) Hexanoic Acid, Succinimidyl Ester (Dansyl-X, SE), Lissamine Rhodamine B Sulfonyl Chloride, Malachite Green isothiocyanate, NBD Chloride, 4-Chloro-7-Nitrobenz-2-Oxa-1,3-Diazole (4-Chloro-7-Nitrobenzofurazan), NBD Fluoride; 4-Fluoro-7-Nitrobenzofurazan, 4-Fluoro-7-Nitrobenz-2-Oxa-1,3-Diazole, NBD-X, and PyMPO (Life Technologies, Carlsbad, Calif.); CyDyes^{®}, including Cy 3, Cy 3B, Cy 3.5, Cy 5, Cy 5.5, Cy 7 (GE Healthcare, Little Chalfont, UK); ATTO dyes, including ATTO 390, 425, 465, 488, 495, 520, 532, 550, 565, 590, 594, 610, 611X, 620, 633, 635, 637, 647, 647N, 655, 680, 700, 729, and 740 (ATTO-TEC GmbH, Siegen, Germany); DY dyes, including DY 350, 405, 415, 490, 495, 505, 530, 547, 548, 549, 550, 554, 555, 556, 560, 590, 591, 594, 605, 610, 615, 630, 631, 632, 633, 634, 635, 636, 647, 648, 649, 650, 651, 652, 654, 675, 676, 677, 678, 679, 680, 681, 682, 700, 701, 703, 704, 730, 731, 732, 734, 749, 750, 751, 752, 754, 776, 777,778,780,781,782,800, 831,480XL,481XL,485XL,510XL,520XL, and 521XL(Dyomics, Jena, Germany); CF^{™} dyes, including CF 350, 405, 485, 488, 532, 543, 555, 568, 594, 620R, 633, 640R, 647, 660C, 660R, 680, 680R, 750, 770, and 790 (Biotium, Hayward, Calif.); CAL Fluor^{®} dyes, including CAL Fluor Gold 540, Orange 560, Red 590, Red 610, Red 635 (Biosearch Technologies, Novato, Calif.); Quasar^{®} dyes, including Quasar 570, 670, 705 (Biosearch Technologies, Novato, Calif.); Biosearch Blue and Pulsar^{®} 650 (Biosearch Technologies, Novato, Calif.); DyLight^{®} Fluor dyes, including DYLight 350, 405, 488, 550, 594, 633, 650, 680, 755, 800 (Thermo Fisher Scientific, Waltham, Mass.); FluoProbes^{®} dyes, including FluoProbes 390, 488, 532, 547H, 594, 647H, 682, 752, 782 (Interchim, Montlu çon Cedex, France); SeTau dyes, including SeTau 380, 425, 405, 404, 655, 665, and 647 (SETA BioMedicals, Urbana, Ill.); Square dyes, including Square 635, 660, and 685 (SETA BioMedicals, Urbana, Ill.); Seta dyes, including, Seta 470, 555, 632, 633, 646, 650, 660, 670, 680, and 750 (SETA BioMedicals, Urbana, Ill.); SQ-565 and SQ-780 (SETA BioMedicals, Urbana, Ill.); Chromeo^{™} dyes, including Chromeo 488, 494, 505, 546, and 642 (Active Motif, Carlsbad, Calif.); Abberior STAR dyes, including STAR 440SX, 470SX, 488, 512, 580, 635, and 635P (Abberior GmbH, Gottingen, Germany); Abberior CAGE dyes, including CAGE 500, 532, 552, and 590 (Abberior GmbH, Gottingen, Germany); Abberior FLIP 565 (Abberior GmbH, Gottingen, Germany); IRDye^{®} Infrared Dye, including IRDye 650, 680LT, 680RD, 700DX, 750, 800CW, and 800RS (LI-COR Biosciences, Lincoln, Nebr.); Tide Fluor^{™} dyes, including TF1, TF2, TF3, TF4, TF5, TF6, TF7, and TF8 (AAT Bioquest, Inc., Sunnyvale, Calif.); iFluor^{™} dyes, including iFluor^{™} 350, 405, 488, 514, 532, 555, 594, 610, 633, 647, 680, 700, 750, and 790 (AAT Bioquest, Inc., Sunnyvale, Calif.); mFluor^{™} dyes, including mFluor Blue 570, Green 620, Red 700, Red780, Violet 450, Violet 510, Violet 540, and Yellow 630 (AAT Bioquest, Inc., Sunnyvale, Calif.); trFluor^{™} Eu and trFluor Tb (AAT Bioquest, Inc., Sunnyvale, Calif.); HiLyte Fluor^{™} dyes, including HiLyte Fluor 405, 488, 555, 594, 647, 680, and 750 (AnaSpec, Inc., Fremont, Calif.); Terbium Cryptate and Europium Cryptate (Cisbio Bioassays, Codolet, France); and other nucleotide classical dyes, including FAM, TET, JOE, VIC^{™}, HEX, NED, TAMRA, ROX^{™}, Texas Red^{®} (Biosearch Technologies, Novato, Calif.).

The radiation receiving device may comprise a translucent gel. The radiation receiving device may be made of a translucent gel. The translucent gel may comprise a fluorophore and / or fluorescent particles, which may be selected from the above identified materials.

The method may further comprise the use of a fluorophore which is predominantly excited by light in the lower range of wave-lengths (e.g. absorption maximum at wavelengths below 440 nm) with a large Stokes' shift (e.g. at least 60 nm), a high molar extinction coefficient (e.g. at least 15,000 cm⁻¹M⁻¹) and a high quantum yield (e.g. at least 50%), e.g. Hoechst 33258, QDot^{®} 585, Alexa Fluor 350, Fura-2, Indo-1, Fluoprobe 390A or 7-amino-4-methylcoumarin-3-acetic acid (AMCA).

The method may further comprise applying a magnetic field above the specific region. The magnetic field may be applied such that a direction of the magnetic field is essentially perpendicular (or strictly perpendicular) to the surface of the subject or essentially parallel (or strictly parallel) to an optical axis of the optical detection device. Essentially perpendicular to the surface means within an angle of plus/minus 10° from the perpendicular arrangement, alternatively within an angle of plus/minus 5° from the perpendicular arrangement. Essentially parallel to the optical axis means within an angle of plus/minus 10° from the parallel arrangement, alternatively within an angle of plus/minus 5° from the parallel arrangement. Charged particles are subject to a force in a magnetic field which is defined by the velocity of the particle and the direction of the magnetic field vector, the so-called Lorentz force. In general, this force leads to spirally formed paths of the charged particles around the direction of the magnetic field lines.

A permanent magnet may be arranged on the surface of the subject at the specific region. The permanent magnet may be formed as a torus or a ring, e.g. having an axial magnetization direction. The permanent magnet may comprise a samarium cobalt alloy or a neodymium iron boron alloy. The permanent magnet may be made of a samarium cobalt alloy or a neodymium iron boron alloy.

A height of a ring magnet with axial magnetization direction may be at most as large as an inner diameter of ring magnet. Hereby, a relative magnetic field strength in an inner region of the ring magnet may be maximized.

An inner region of a torus-formed permanent magnet or of a ring-formed permanent magnet may be at least partially or completely filled with the radiation receiving material.

The torus-formed magnet or ring-formed magnet may be arranged on the surface of the subject such that the lesion or parts of it are in the inner region of the torus-formed magnet or ring-formed magnet.

The radiation receiving device may be formed as a suit which partially or completely surrounds the subject. The radiation receiving device may be formed as a glove or a stocking. The radiation receiving device may be formed as a cap for a finger or a toe. The suit, the glove, and the stocking may be made of chloroprene rubber, e.g. with a thickness of 1 - 10 mm or 1 - 5 mm. The cap may be made of silicone rubber, e.g. with a thickness of 1 - 10 mm or 1 - 5 mm. The radiation receiving device may be provided as a bandage, e.g. with a thickness of 1 - 10 mm or 1 - 5 mm.

The radiation receiving device may be provided as a self-adhesive tape, e.g. comprising polyurethane foam and natural latex. The tape may be antiseptic, e.g. by adding dichlorophene.

The features disclosed in context with the method can be applied to the arrangement and vice versa.

### DESCRIPTION OF EMBODIMENTS

Following, exemplary embodiments are disclosed with reference to figures. Here:
- Fig. 1: shows a schematic representation of the PET principle.
- Fig. 2: shows a schematic representation of the PET principle using a radiation receiving device.
- Fig. 3: shows a schematic representation of the Cherenkov imaging principle using a radiation receiving device not corresponding to the invention as defined in the claims but possibly useful for the understanding thereof.
- Fig. 4: shows another embodiment of the Cherenkov imaging principle using a radiation receiving device not corresponding to the invention as defined in the claims but possibly useful for the understanding thereof.
- Fig. 5: shows the embodiment of Fig. 4 surrounded by a housing.
- Fig. 6: shows several embodiments of the radiation receiving device according to the invention.

Following, same reference numbers refer to same components.

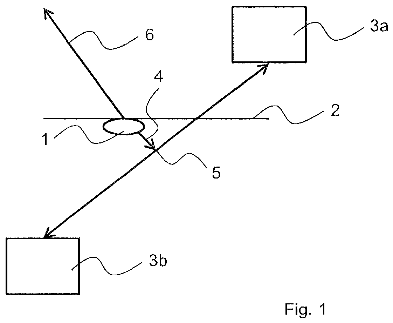

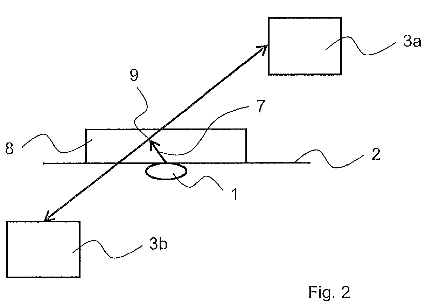

Fig. 1 shows a schematic representation of the PET principle as known in the prior art. A radioactive substance is inserted into or present in the subject. The radioactive substance is deposited or accumulates in a specific region 1, e.g. tumor cells. The specific region 1 is located close beneath the surface 2 of the subject. Alternatively or additionally, the specific region 1 can be located at the surface 2 of the subject. Two detectors 3a, 3b are provided in order to detect annihilation radiation. In Fig. 1 and 2, the region above the surface 2 is air and the region below the surface 2 is tissue of the subject.

A first positron 4 is emitted by the radioactive substance in the specific region 1. The first positron 4 propagates in the tissue below the surface 2. It interacts with an electron at a first interaction position 5 which is close to the specific region 1. The annihilation radiation emitted by the interaction is detected by the detectors 3a, 3b. This signal can be used to obtain information about the specific region 1, e.g. its radioactivity concentration. A second positron 6 is emitted and escapes from the specific region 1 through the surface 2 into the air. The second positron 6 moves through the air without being stopped to annihilate with an electron. The mean free path is very high (see table above) and the second positron 6 is lost for PET detection. Fig. 2 shows a schematic representation of an arrangement where a radiation receiving device 8 is arranged on the surface 2 above the specific region 1. A third positron 7 is emitted and escapes from the subject through the surface 2 and enters the radiation receiving device 8. Because the mass density of the radiation receiving device 8 is higher than the mass density of air, an interaction of the third positron 7 with an electron occurs at a second interaction position 9. The second interaction position 9 is located inside the radiation receiving device 8 and close to the specific region 1. Annihilation radiation is detected by the detectors 3a, 3b. The signal strength at the detectors is increased. The arrangement may be used in PET detection. In this embodiment, the radiation receiving device 8 can also be called a "positron stopper".

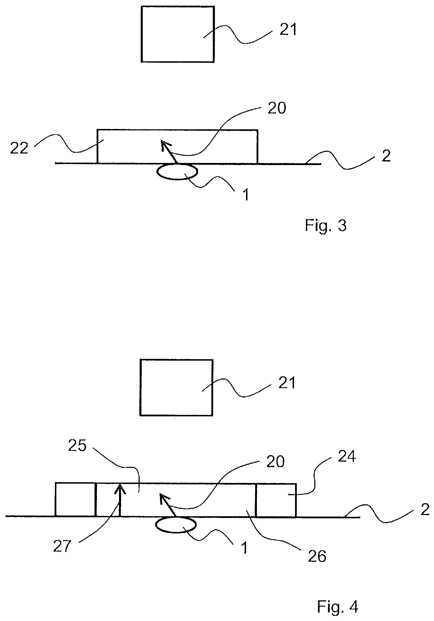

Fig. 3 shows a schematic representation of an arrangement which may be used in order to perform Cherenkov imaging not corresponding to the invention as defined in the claims but possibly useful for the understanding thereof. As above, a radioactive substance has accumulated in the specific region 1 which is located below the surface 2 of the subject. A charged particle 20 (e.g. an electron or a positron), which is generated by radioactive decay of the radioactive substance, is emitted and leaves the subject through the surface 2. The velocity of the charged particle 20 is reduced in the radiation receiving device 22 which comprises a dielectric material. Light emission is generated by Cherenkov radiation of the slowed-down charged particle 20. The light emission is detected by an optical detection device 21 (e.g. a CCD or an EM-CCD). More than one optical detection device may be used in order to detect the light emission. In this example, the radiation receiving device 22 can also be called a "charged particle stopper". The radiation receiving device 22 may comprise a fluorochrome.

Another example of an arrangement for Cherenkov imaging is shown in Fig. 4 not corresponding to the invention as defined in the claims but possibly useful for the understanding thereof. A ring-formed permanent magnet 24 is arranged on the surface 2 such that an inner region 25 of the permanent magnet 24 is arranged above the specific region 1. The magnetic field vector 27 of the permanent magnet 24 is aligned almost perpendicular to the surface 2. The inner region 25 is filled with a dielectric material 26 being a radiation receiving material. The dielectric material 26 may comprise a fluorochrome.

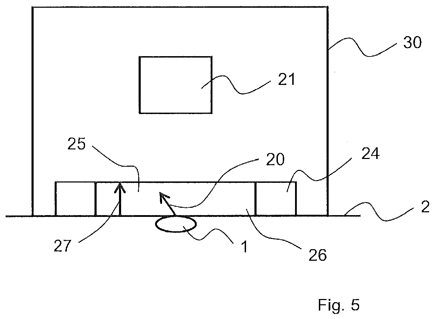

Fig. 5 shows the arrangement of Fig. 4, wherein the components are arranged in an opaque housing 30.

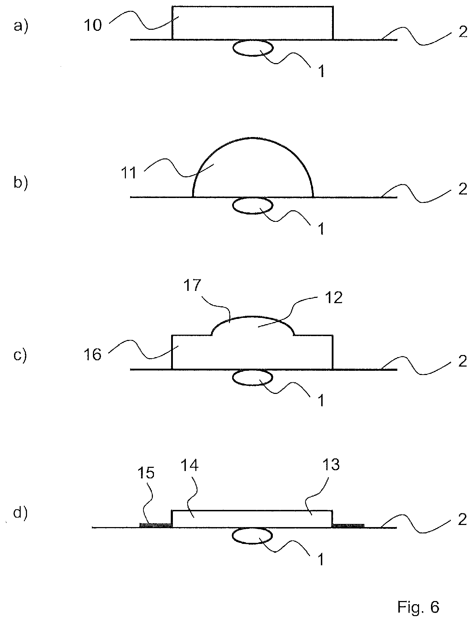

Fig. 6 shows several embodiments of radiation receiving devices. In Fig. 6a, a radiation receiving device 10 is formed as a plane layer on the surface 2. A radiation receiving device 11 with a rounded form, e.g. a semi-circle, is shown in Fig. 6b. In another embodiment, a radiation receiving device 12 is formed with a planar part 16 on which an elevated portion 17 is formed. The planar part 16 is arranged on the surface 2 such that the elevated portion is positioned above the specific region 1 (Fig. 6c). Fig. 6d shows a patch 13 comprising a radiation receiving material 14 and an outer portion 15. The outer portion 15 comprises an adhesive layer for fixing the patch 13 to the surface 2. The radiation receiving material 14 is arranged above the specific region 1. The embodiments shown in Fig. 6 can be used for PET as well as for Cherenkov imaging.

Following, details on experimental validation are provided. Phantom measurements were performed to demonstrate the increase in PET signal by the use of the invention.

### Methods:

To simulate a superficial accumulation of a positron emitting tracer, a defined arrangement of radioactivity on the surface of a material equivalent to soft tissue was used.

As a surrogate of a superficial skin lesion, a circular cutout was utilized, made of coffee filter paper with a diameter of 6.0 mm by using an office punch (Leitz 5008).

The underlying soft tissue below the superficial lesion was simulated by a 20.6 x 20.6 x 7.62 mm conic Bumpon^{™} (SJ-5323, 3M Deutschland GmbH) made of polyurethane. The bottom surface of this object is coated with a thin (less than 0.1 mm) self-adhesive coating.

The conic Bumpon^{™} was turned upside-down so that the paper cutout could be easily placed and glued in the center of the self-adhesive footprint.

Using a calibrated pipette, the paper cutout was soaked with 1.5 microliters of a liquid solution of F-18 fludeoxyglucose.

A row of 4 such Bumpons was prepared on a plastic tray with F-18 activities ranging from 161 to 197 kBq. This phantom was placed on the patient bed of a clinical PET/CT scanner (Biograph mCT40.S Flow TrueV, Siemens, Erlangen, Germany).

Repeated PET/CT measurements were done (1) with the uncovered row of 4 Bumpons, (2) with 2 additional Bumpons (as the "radiation receiving device") sticked on the 2 central Bumpons (Source #2 und #3) in the row and (3) with 2 further Bumpons (also as the "radiation receiving device") sticked on the 2 remaining Bumpons (Source #1 and #4) at the end of the row. The second and third PET/CT measurement allowed observing the effect of the radiation receiving devices on the detected PET signal arising from the positron emitting sources.

The 3 PET acquisitions were performed with a standard clinical PET scanning protocol (continuous bed motion, time-of-flight mode, frame duration >120 seconds).

The corresponding 3 CT acquisitions (to be used for attenuation and scatter correction of the PET scan) were performed with a peak tube voltage of 120 kV and 20 mA tube current using a detector collimation of 0.6 mm and a pitch factor of 1.5.

Standard CT image reconstruction was done using the B3of kernel to obtain a set of images with 512 times 512 pixel at a pixel spacing of 1.5234375 mm with a slice thickness of 1.5 mm.

PET image reconstruction was performed with the standard software using an iterative algorithm (ordered subset expectation maximization, OSEM) with 2 iterations of 21 subsets in 3D with the use of time-of-flight-information using a model based scatter correction with relative scatter scaling. Attenuation correction was based on the respective CT data set. PET images were sized 200 times 200 pixels with a pixel spacing of 4.07283 mm and a slice thickness of 1.5 mm. A post-reconstruction filter with a 2 mm full width at half maximum (FWHM) Gauss kernel was applied.

PET measurements were analyzed by a region-of-interest technique. A spherical volume-of-interest (VOI) with a diameter of 2.0 cm was manually placed over the activity accumulations from all sources in all PET data sets. The sum of counts in the VOI was used for further evaluation. All measurements in the PET images were performed with Osirix MD V7.0.2. All radioactivity measurements were corrected for decay.

### Results:

The results of the detected decay events from the aforementioned PET acquisitions and its relative change between the 3 measurements can be found in Table 1. In average, the relative increase in the PET signal is above 40% for the inventively use of a radiation receiving device covering the superficial positron emitting sources and absorbing the otherwise escaping positrons.

**Table 1: Results from phantom measurements with and without the radiation receiving device. Relative changes in counts between uncovered and covered sources are marked by an asterisk.**

| | **Counts Scan 1** | **Counts Scan 2** | **Counts Scan 3** | **Counts Scan 2 to Scan 1** | **Counts Scan 3 to Scan 2** | **Counts Scan 3 to Scan 1** |
|---|---|---|---|---|---|---|
| **Source 1** | 4198861 | 4316990 | 6005697 | 2.8 % | 39.1 % * | 43.0 % * |
| **Source 2** | 3740328 | 5394638 | 5316337 | 44.2 % * | -1.5 % | 42.1 % * |
| **Source 3** | 3535921 | 5080394 | 5041470 | 43.7%* | -0.8% | 42.6%* |
| **Source 4** | 3603137 | 3605411 | 5203865 | 0.1 % | 44.3 %* | 44.4 %* |

### Conclusion:

The use of the radiation receiving device increases the PET signal in the detection device.

The features disclosed in the specification, the claims and the figures may be relevant for implementation of embodiments either alone or in any combination with each other. The scope of the invention is defined by the appended claims.

## Claims

1. A method comprising steps of:
- arranging a radiation receiving device (8; 22) directly on a surface (2) of a subject above a specific region (1) of the subject, wherein the specific region (1) is located below the surface (2) of the subject or at the surface (2) of the subject, wherein the specific region (1) contains a radioactive substance, wherein the radiation receiving device (8; 22) has a mass density larger than the mass density of air and is adapted to generate a signal from radiation emitted by the radioactive substance and entering the radiation receiving device (8; 22),
wherein the radiation receiving device (8; 22) is formed as a patch (13) having a layer and/or a container of a radiation receiving material (14), wherein the radiation receiving material (14) is a plastic material, a rubber material, a silicon rubber material, a foam material or a combination thereof or a gel material, wherein the method further comprises fixing the radiation receiving device (8; 22) to the surface (2) of the subject by an adhesive, and
- detecting the signal by a detection device (3a, 3b; 21),
wherein
- the radioactive substance emits positrons and the radiation receiving device (8) is adapted to prevent an escape of the positrons and to generate annihilation radiation within the radiation receiving device (8), said annihilation radiation corresponding to the signal generated by the radiation receiving device (8, 22) and detected by the detection device (3a, 3b).

2. The method of claim 1, wherein a thickness of the radiation receiving device (8; 22) is adjusted to the radioactive substance, such that the thickness measured in millimeters is 3 to 6 times the maximum kinetic energy of the particles emitted by radioactive decay of the radioactive substance measured in mega electron volts.

3. The method of claim 1 or 2, wherein a width of the radiation receiving device (8; 22) is adjusted to the radioactive substance, such that a length of a portion of the radiation receiving device (8; 22) which extends beyond the specific region (1) measured in millimeters is 3 to 6 times the maximum kinetic energy of the particles emitted by radioactive decay of the radioactive substance measured in mega electron volts.

4. The method of one of the preceding claims, wherein the radiation receiving device (8; 22) comprises a material having a mass density between 0.5 g/cm³ and 2.5 g/cm³.

5. The method of one of the preceding claims, wherein at least a portion of the radiation receiving device (8; 22) is transparent to one of the following: visible light, infrared or near-infrared radiation, ultraviolet radiation and a combination thereof.

6. The method of one of the preceding claims, wherein the radiation receiving device (22) comprises a fluorophore and / or fluorescent particles.

7. The method of one of the preceding claims, further comprising applying a magnetic field above the specific region (1).

8. The method of claim 7, wherein the magnetic field is applied such that a direction of the magnetic field is essentially perpendicular to the surface (2) of the subject or essentially parallel to an optical axis of the optical detection device (21).

9. The method of claim 7 or 8, wherein a permanent magnet (24) is arranged on the surface (2) of the subject at the specific region (1), wherein the permanent magnet (24) is preferably formed as a torus or a ring.

10. Use of a radiation receiving device (8; 22) in one of the preceding methods, wherein the radiation receiving device (8; 22) is adapted to generate a signal from radiation emitted by a radioactive substance and entering the radiation receiving device (8; 22).

11. An arrangement, comprising:
- a radioactive substance which is suitable for being applied to a subject, wherein the radioactive substance accumulates in a specific region (1) of the subject, wherein the specific region (1) is located below a surface (2) of the subject or at the surface (2) of the subject,
- a radiation receiving device (8; 22) which is suitable for being arranged on the surface (2) of the subject above the specific region (1), wherein the radiation receiving device is formed as a patch (13) having a layer and/or a container comprising a radiation receiving material (14), wherein the radiation receiving material (14) is arranged in an inner region of the patch and an outer region of the patch comprises an adhesive layer for fixing the patch directly to the surface (2), wherein the radiation receiving material (14) is a plastic material, a rubber material, a silicon rubber material, a foam material or a combination thereof or a gel material and has a mass density larger than the mass density of air, and wherein the radiation receiving device (8; 22) is adapted to generate a signal from radiation emitted by the radioactive substance and entering the radiation receiving device (8; 22), and
- a detection device (3a, 3b; 21) which is adapted to detect the signal,
wherein
- the radioactive substance emits positrons and the radiation receiving device (8) is adapted to prevent an escape of the positrons and to generate annihilation radiation within the radiation receiving device (8), said annihilation radiation corresponding to the signal generable by the radiation receiving device (8, 22) and detectable by the detection device (3a, 3b).

## Patentansprüche

1. Verfahren, das die folgenden Schritte umfasst:
- Anordnen einer Strahlungsempfangsvorrichtung (8; 22) direkt auf einer Oberfläche (2) eines Subjekts über einem spezifischen Bereich (1) des Subjekts, wobei sich der spezifische Bereich (1) unter der Oberfläche (2) des Subjekts oder an der Oberfläche (2) des Subjekts befindet, wobei der spezifische Bereich (1) eine radioaktive Substanz enthält, wobei die Strahlungsempfangsvorrichtung (8; 22) eine Massendichte aufweist, die größer als die Massendichte von Luft ist, und dafür ausgelegt ist, ein Signal aus Strahlung zu erzeugen, die von der radioaktiven Substanz emittiert wird und in die Strahlungsempfangsvorrichtung (8; 22) eintritt, wobei die Strahlungsempfangsvorrichtung (8; 22) als ein Pflaster (13) ausgebildet ist, das eine Schicht und/oder einen Behälter aus einem Strahlungsempfangsmaterial (14) aufweist, wobei das Strahlungsempfangsmaterial (14) ein Kunststoffmaterial, ein Gummimaterial, ein Silikongummimaterial, ein Schaummaterial oder eine Kombination davon oder ein Gelmaterial ist, wobei das Verfahren ferner das Befestigen der Strahlungsempfangsvorrichtung (8; 22) an der Oberfläche (2) des Subjekts durch einen Klebstoff umfasst, und
- Erfassen des Signals durch eine Erfassungsvorrichtung (3a, 3b; 21),
wobei
- die radioaktive Substanz Positronen emittiert und die Strahlungsempfangsvorrichtung (8) dafür ausgelegt ist, ein Austreten der Positronen zu verhindern und eine Annihilationsstrahlung innerhalb der Strahlungsempfangsvorrichtung (8) zu erzeugen, wobei die Annihilationsstrahlung dem Signal entspricht, das von der Strahlungsempfangsvorrichtung (8, 22) erzeugt und von der Erfassungsvorrichtung (3a, 3b) erfasst wird.

2. Verfahren nach Anspruch 1, wobei eine Dicke der Strahlungsempfangsvorrichtung (8; 22) an die radioaktive Substanz angepasst ist, so dass die Dicke, gemessen in Millimetern, das 3- bis 6-fache der maximalen kinetischen Energie der Partikel beträgt, die durch radioaktiven Zerfall der radioaktiven Substanz emittiert werden, gemessen in Megaelektronenvolt.

3. Verfahren nach Anspruch 1 oder 2, wobei eine Breite der Strahlungsempfangsvorrichtung (8; 22) an die radioaktive Substanz angepasst ist, so dass eine Länge eines Abschnitts der Strahlungsempfangsvorrichtung (8; 22), der sich über den spezifischen Bereich (1) hinaus erstreckt, gemessen in Millimetern, das 3- bis 6-fache der maximalen kinetischen Energie der Partikel beträgt, die durch radioaktiven Zerfall der radioaktiven Substanz emittiert werden, gemessen in Megaelektronenvolt.

4. Verfahren nach einem der vorhergehenden Ansprüche, wobei die Strahlungsempfangsvorrichtung (8; 22) ein Material mit einer Massendichte zwischen 0,5 g/cm³ und 2,5 g/cm³ umfasst.

5. Verfahren nach einem der vorhergehenden Ansprüche, wobei mindestens ein Abschnitt der Strahlungsempfangsvorrichtung (8; 22) für eines der Folgenden transparent ist: sichtbares Licht, Infrarot- oder Nahinfrarotstrahlung, Ultraviolettstrahlung und eine Kombination davon.

6. Verfahren nach einem der vorhergehenden Ansprüche, wobei die Strahlungsempfangsvorrichtung (22) ein Fluorophor und/oder fluoreszierende Partikel umfasst.

7. Verfahren nach einem der vorhergehenden Ansprüche, das ferner das Anlegen eines Magnetfelds über dem spezifischen Bereich (1) umfasst.

8. Verfahren nach Anspruch 7, wobei das Magnetfeld so angelegt wird, dass eine Richtung des Magnetfelds im Wesentlichen senkrecht zu der Oberfläche (2) des Subjekts oder im Wesentlichen parallel zu einer optischen Achse der optischen Erfassungsvorrichtung (21) ist.

9. Verfahren nach Anspruch 7 oder 8, wobei ein Permanentmagnet (24) auf der Oberfläche (2) des Subjekts an dem spezifischen Bereich (1) angeordnet ist, wobei der Permanentmagnet (24) vorzugsweise als ein Torus oder ein Ring ausgebildet ist.

10. Verwendung einer Strahlungsempfangsvorrichtung (8; 22) in einem der vorhergehenden Verfahren, wobei die Strahlungsempfangsvorrichtung (8; 22) dafür ausgelegt ist, ein Signal aus Strahlung zu erzeugen, die von einer radioaktiven Substanz emittiert wird und in die Strahlungsempfangsvorrichtung (8; 22) eintritt.

11. Anordnung, die Folgendes umfasst:
- eine radioaktive Substanz, die dafür geeignet ist, auf ein Subjekt aufgebracht zu werden, wobei sich die radioaktive Substanz in einem spezifischen Bereich (1) des Subjekts ansammelt, wobei sich der spezifische Bereich (1) unter einer Oberfläche (2) des Subjekts oder an der Oberfläche (2) des Subjekts befindet,
- eine Strahlungsempfangsvorrichtung (8; 22), die dafür geeignet ist, auf der Oberfläche (2) des Subjekts über dem spezifischen Bereich (1) angeordnet zu werden, wobei die Strahlungsempfangsvorrichtung als ein Pflaster (13) ausgebildet ist, das eine Schicht und/oder einen Behälter aufweist, der ein Strahlungsempfangsmaterial (14) umfasst, wobei das Strahlungsempfangsmaterial (14) in einem inneren Bereich des Pflasters angeordnet ist und ein äußerer Bereich des Pflasters eine Klebstoffschicht zum Befestigen des Pflasters direkt an der Oberfläche (2) umfasst, wobei das Strahlungsempfangsmaterial (14) ein Kunststoffmaterial, ein Gummimaterial, ein Silikongummimaterial, ein Schaummaterial oder eine Kombination davon oder ein Gelmaterial ist und eine Massendichte aufweist, die größer als die Massendichte von Luft ist, und wobei die Strahlungsempfangsvorrichtung (8; 22) dafür ausgelegt ist, ein Signal aus Strahlung zu erzeugen, die von der radioaktiven Substanz emittiert wird und in die Strahlungsempfangsvorrichtung (8; 22) eintritt, und
- eine Erfassungsvorrichtung (3a, 3b; 21), die dafür ausgelegt ist, das Signal zu erfassen,
wobei
- die radioaktive Substanz Positronen emittiert und die Strahlungsempfangsvorrichtung (8) dafür ausgelegt ist, ein Austreten der Positronen zu verhindern und eine Annihilationsstrahlung innerhalb der Strahlungsempfangsvorrichtung (8) zu erzeugen, wobei die Annihilationsstrahlung dem Signal entspricht, das von der Strahlungsempfangsvorrichtung (8, 22) erzeugbar und von der Erfassungsvorrichtung (3a, 3b) erfassbar ist.

## Revendications

1. Procédé comprenant les étapes consistant à :
- agencer un dispositif de réception de rayonnement (8 ; 22) directement sur une surface (2) d'un sujet au-dessus d'une région spécifique (1) du sujet, dans lequel la région spécifique (1) est située en dessous de la surface (2) du sujet ou au niveau de la surface (2) du sujet, dans lequel la région spécifique (1) contient une substance radioactive, dans lequel le dispositif de réception de rayonnement (8 ; 22) a une densité de masse supérieure à la densité de masse de l'air et est adapté pour générer un signal à partir du rayonnement émis par la substance radioactive et entrant dans le dispositif de réception de rayonnement (8 ; 22),
dans lequel le dispositif de réception de rayonnement (8 ; 22) est formé comme un timbre (13) ayant une couche et/ou un récipient d'un matériau de réception de rayonnement (14), dans lequel le matériau de réception de rayonnement (14) est un matériau plastique, un matériau en caoutchouc, un matériau en caoutchouc au silicium, un matériau en mousse ou une combinaison de ceux-ci ou un matériau en gel, dans lequel le procédé comprend en outre la fixation du dispositif de réception de rayonnement (8 ; 22) à la surface (2) du sujet par un adhésif, et
- détecter le signal par un dispositif de détection (3a, 3b; 21),
dans lequel
- la substance radioactive émet des positrons et le dispositif de réception de rayonnement (8) est adapté pour empêcher une fuite des positrons et pour générer un rayonnement d'annihilation à l'intérieur du dispositif de réception de rayonnement (8), ledit rayonnement d'annihilation correspondant au signal généré par le dispositif de réception de rayonnement (8, 22) et détecté par le dispositif de détection (3a, 3b).

2. Procédé selon la revendication 1, dans lequel une épaisseur du dispositif de réception de rayonnement (8 ; 22) est ajustée à la substance radioactive, de sorte que l'épaisseur mesurée en millimètres est de 3 à 6 fois l'énergie cinétique maximale des particules émises par désintégration radioactive de la substance radioactive mesurée en mégaélectrons-volts.

3. Procédé selon la revendication 1 ou 2, dans lequel une largeur du dispositif de réception de rayonnement (8 ; 22) est ajustée à la substance radioactive, de sorte qu'une longueur d'une partie du dispositif de réception de rayonnement (8 ; 22) qui s'étend au-delà de la région spécifique (1) mesurée en millimètres est de 3 à 6 fois l'énergie cinétique maximale des particules émises par désintégration radioactive de la substance radioactive mesurée en mégaélectrons-volts.

4. Procédé selon l'une des revendications précédentes, dans lequel le dispositif de réception de rayonnement (8 ; 22) comprend un matériau ayant une masse volumique comprise entre 0,5g/cm³ et 2,5g/cm³.

5. Procédé selon l'une des revendications précédentes, dans lequel au moins une partie du dispositif de réception de rayonnement (8 ; 22) est transparente à l'un des éléments suivants : lumière visible, rayonnement infrarouge ou proche infrarouge, rayonnement ultraviolet et une combinaison de ceux-ci.

6. Procédé selon l'une des revendications précédentes, dans lequel le dispositif de réception de rayonnement (22) comprend un fluorophore et/ou des particules fluorescentes.

7. Procédé selon l'une des revendications précédentes, comprenant en outre l'application d'un champ magnétique au-dessus de la région spécifique (1).

8. Procédé selon la revendication 7, dans lequel le champ magnétique est appliqué de sorte qu'une direction du champ magnétique soit essentiellement perpendiculaire à la surface (2) du sujet ou essentiellement parallèle à un axe optique du dispositif de détection optique (21).

9. Procédé selon la revendication 7 ou 8, dans lequel un aimant permanent (24) est agencé sur la surface (2) du sujet au niveau de la région spécifique (1), dans lequel l'aimant permanent (24) est de préférence formé comme un tore ou un anneau.

10. Utilisation d'un dispositif de réception de rayonnement (8 ; 22) dans l'un des procédés précédentes, dans laquelle le dispositif de réception de rayonnement (8 ; 22) est adapté pour générer un signal à partir du rayonnement émis par une substance radioactive et entrant dans le dispositif de réception de rayonnement (8 ; 22).

11. Agencement, comprenant :
- une substance radioactive qui est appropriée pour être appliquée à un sujet, dans lequel la substance radioactive s'accumule dans une région spécifique (1) du sujet, dans lequel la région spécifique (1) est située en dessous d'une surface (2) du sujet ou au niveau de la surface (2) du sujet,
- un dispositif de réception de rayonnement (8 ; 22) qui est approprié pour être agencé sur la surface (2) du sujet au-dessus de la région spécifique (1), dans lequel le dispositif de réception de rayonnement est formé comme un timbre (13) ayant une couche et/ou un récipient comprenant un matériau de réception de rayonnement (14), dans lequel le matériau de réception de rayonnement (14) est agencé dans une région intérieure du timbre et une région extérieure du timbre comprend une couche adhésive pour fixer le timbre directement à la surface (2), dans lequel le matériau de réception de rayonnement (14) est un matériau plastique, un matériau en caoutchouc, un matériau en caoutchouc au silicium, un matériau en mousse ou une combinaison de ceux-ci ou un matériau en gel et a une densité de masse supérieure à la densité de masse de l'air, et dans lequel le dispositif de réception de rayonnement (8 ; 22) est adapté pour générer un signal à partir du rayonnement émis par la substance radioactive et entrant dans le dispositif de réception de rayonnement (8 ; 22), et
- un dispositif de détection (3a, 3b ; 21) qui est adapté pour détecter le signal,
dans lequel
- la substance radioactive émet des positrons et le dispositif de réception de rayonnement (8) est adapté pour empêcher une fuite des positrons et pour générer un rayonnement d'annihilation à l'intérieur du dispositif de réception de rayonnement (8), ledit rayonnement d'annihilation correspondant au signal générable par le dispositif de réception de rayonnement (8, 22) et détectable par le dispositif de détection (3a, 3b).
